# EUROPÄISCHE PATENTSCHRIFT

(11) **EP 3 543 481 B1**
(45) Veröffentlichungstag und Bekanntmachung des Hinweises auf die Patenterteilung: **28.10.2020**
(21) Anmeldenummer: 19160523.7
(22) Anmeldetag: 04.03.2019
(51) Int. Cl.: F01D 25/18, F02C 7/36

(54) **GASTURBINENTRIEBWERK UND VERFAHREN ZUM EINBRINGEN VON ÖL IN EINE GETRIEBEANORDNUNG**
GAS TURBINE ENGINE AND METHOD FOR INTRODUCING OIL INTO A GEARBOX
TURBOMOTEUR À GAZ ET PROCÉDÉ D'INTRODUCTION DE L'HUILE DANS UN AGENCEMENT DE TRANSMISSION

(30) Priorität: 20.03.2018 DE 102018106488
(43) Veröffentlichungstag der Anmeldung: 25.09.2019
(73) Patentinhaber: Rolls-Royce Deutschland Ltd & Co KG, 15827 Blankenfelde-Mahlow (DE)
(72) Erfinder: KALLIANTERIS, Christos, 15827 Blankenfelde-Mahlow (DE); VENTER, Gideon Daniel, 15827 Blankenfelde-Mahlow (DE)
(74) Vertreter: Müller, Wolfram Hubertus

(56) Entgegenhaltungen:
- EP-A1- 3 156 759
- EP-A2- 3 179 056
- WO-A1-2017/129926
- US-B1- 6 409 464

## Beschreibung

Die Erfindung betrifft ein Gasturbinentriebwerk gemäß dem Oberbegriff des Patentanspruchs 1 sowie ein Verfahren zum Einbringen von Öl in eine Getriebeanordnung.

Es ist bekannt, in einem Getriebefan-Triebwerk den Verzahnungsbereich einer Keilwellenverbindung zwischen Antriebswelle und Sonnenrad eines Planetengetriebes des Getriebefan-Triebwerks mit Öl zu schmieren. Hierbei ist es notwendig, einen ausreichenden Ölstand im Verzahnungsbereich sicherzustellen. Dafür ist es zum einen erforderlich, den Verzahnungsbereich durch Dichtungselemente abzudichten. Zum anderen ist es erforderlich, während des Betriebs Öl in den Verzahnungsbereich einzubringen.

Die WO 2017/129926 A1 beschreibt die Kopplung einer Turbinenwelle mit einem Sonnenrad mittels einer Keilwellenverbindung. Das Sonnenrad ist Teil eines Planetengetriebes, das des Weiteren Planetenräder und ein Hohlrad umfasst. Die Planetenräder drehen sich um mit Trägerplatten verbundene Planetenstifte, in denen radiale Öffnungen für Schmieröl ausgebildet sind.

Aus der EP 3 179 056 A2 ist ein Planetengetriebe bekannt, das über eine Keilwellenverbindung angetrieben wird. Ein Planetenstift des Planetengetriebes ist innen hohl ausgebildet und umfasst Schmierölbohrungen.

Die US 6 409 464 B1 offenbart eine Hauptwelle, mit der eine Rotorwelle über eine Presspassung verbunden ist. In der Rotorwelle sind radial innere Einbuchtungen eines Schmierölsystems vorhanden. Von den Einbuchtungen erstrecken sich Öffnungen radial nach außen durch die Rotorwelle.

Der vorliegenden Erfindung liegt die Aufgabe zugrunde, ein Gasturbinentriebwerk und ein Verfahren bereitzustellen, die in effektiver Weise Öl zur Sicherung eines ausreichenden Ölstands im Verzahnungsbereich zwischen einer Antriebswelle und einem Sonnenrad bereitstellen.

Diese Aufgabe wird durch ein Gasturbinentriebwerk mit den Merkmalen des Anspruchs 1 und ein Verfahren mit den Merkmalen des Anspruchs 12 gelöst. Ausgestaltungen der Erfindung sind in den Unteransprüchen angegeben.

Danach betrachtet ein erster Erfindungsaspekt ein Gasturbinentriebwerk, das einen Triebwerkskern aufweist, der eine Turbine, einen Verdichter und eine die Turbine mit dem Verdichter verbindende Turbinenwelle umfasst. Ein Fan bzw. Gebläse ist stromaufwärts des Triebwerkskerns positioniert, wobei der Fan mehrere Fanschaufeln umfasst. Des Weiteren ist ein Getriebe vorgesehen, das einen Eingang von der Turbinenwelle empfängt und Antrieb für den Fan zum Antreiben des Fans mit einer niedrigeren Drehzahl als die Kernwelle abgibt. Das Getriebe weist ein Sonnenrad auf, das von der Turbinenwelle angetrieben wird. Die Turbinenwelle und das Sonnenrad bilden eine Keilwellenverbindung, die mit Öl geschmiert ist.

Es ist vorgesehen, dass die Turbinenwelle auf ihrer der Keilwellenverbindung abgewandten, radial inneren Seite mindestens eine Einbuchtung aufweist, die dazu geeignet ist, Öl aufzunehmen, und die Turbinenwelle mindestens eine Bohrung aufweist, die sich von der Einbuchtung zur radial äußeren Seite der Turbinenwelle erstreckt und die dazu geeignet ist, bei Rotation der Turbinenwelle Öl von der mindestens einen Einbuchtung zur radial äußeren Seite der Turbinenwelle zu transportieren und in die Keilwellenverbindung einzubringen.

Die Erfindung beruht auf dem Gedanken, Öl durch Nutzung der Zentrifugalkraft an geeigneter Stelle in eine Keilwellenverbindung einzubringen, wobei das Öl zunächst in eine Einbuchtung eingebracht wird, die an der radial inneren Seite der als Hohlwelle ausgebildeten Turbinenwelle ausgebildet und damit der Keilwellenverbindung abgewandt ist. Von der Einbuchtung gelangt das Öl bei Rotation der Turbinenwelle aufgrund der dabei auf das Öl wirkenden Zentrifugalkraft über sich radial in der Turbinenwelle erstreckende Bohrungen zur radial äußeren Seite der Turbinenwelle und damit zur Keilwellenverbindung.

Eine Ausgestaltung der Erfindung sieht vor, dass die Einbuchtung durch eine in Umfangsrichtung durchgehenden Nut gebildet ist. Hierbei handelt es sich jedoch nur um ein Ausführungsbeispiel. Grundsätzlich kann die Einbuchtung eine Vielzahl von Formen und Ausgestaltungen annehmen. Beispielsweise können alternativ mehrere kreisförmige Einbuchtungen in Umfangsrichtung aufeinanderfolgend ausgebildet sein.

Eine weitere Ausgestaltung der Erfindung sieht vor, dass mehrere Bohrungen vorgesehen sind, die sich von der Einbuchtung zur radial äußeren Seite der Turbinenwelle erstrecken, wobei die Bohrungen beispielsweise äquidistant in Umfangsrichtung angeordnet sind. Auch kann vorgesehen sein, dass mehrere Bohrungen vorgesehen sind, die in axialer Richtung hintereinander angeordnet sind. Die Bohrungen verlaufen jeweils in radialer Richtung oder weisen zumindest eine radiale Komponente auf.

Eine weitere Ausgestaltung der Erfindung sieht vor, dass die Einbuchtung axial derart positioniert ist, dass die mindestens eine Bohrung in einem abgedichteten Bereich der Keilwellenverbindung endet. Hierdurch kann die Keilwellenverbindung sicher mit ausreichend Öl versehen werden. Dabei kann vorgesehen sein, dass die Einbuchtung sich axial zwischen einem axial vorderen und einem axial hinteren Dichtungselement der Keilwellenverbindung befindet. Bei den Dichtungselementen handelt es sich beispielsweise um einen vorderen Dichtungsring und einen hinteren Dichtungsring, die die Keilwellenverbindung abdichten und für einen ausreichenden Ölstand der Keilwellenverbindung sorgen. Dabei sieht eine Ausgestaltung vor, dass die mindestens eine Einbuchtung in axialer Richtung vor dem Verzahnungsbereich der Keilwellenverbindung ausgebildet ist.

Gemäß einer Ausgestaltung der Erfindung umfasst das Gasturbinentriebwerk des Weiteren einen Ölapplikator, über den Öl in die mindestens eine Einbuchtung eingebracht wird. Der Ölapplikator ist beispielsweise eine Sprüheinrichtung, die einen Öljet gezielt abgibt.

Eine Ausführungsvariante hierzu sieht vor, dass der Ölapplikator derart ausgerichtet und positioniert ist, dass Öl direkt in die mindestens eine Einbuchtung gesprüht wird. Der Ölapplikator ist dabei insbesondere benachbart der offenen Stirnseite der Turbinenwelle angeordnet, so dass über die Stirnseite Öl direkt eingesprüht werden kann.

Eine andere Ausführungsvariante hierzu sieht vor, dass der Ölapplikator derart ausgerichtet und positioniert ist, dass Öl indirekt in die mindestens eine Einbuchtung eingebracht wird. Das Öl wird somit zunächst einer anderen Stelle zugeführt und von dieser in die mindestens eine Einbuchtung eingebracht. Das Bereitstellen von Öl durch den Ölapplikator erfolgt dabei wiederum beispielsweise von der offenen Stirnseite der Turbinenwelle.

Ein Ausführungsbeispiel hierzu sieht vor, dass der Ölapplikator derart ausgerichtet und positioniert ist, dass Öl auf eine Welle gesprüht wird, die radial innen der Turbinenwelle angeordnet ist, und von der Welle in die mindestens eine Einbuchtung abprallt oder abschleudert. Bei der Welle handelt es sich um eine innerhalb der Antriebswelle verlaufende Welle. Eine solche kann mit dem Fan gekoppelt und insbesondere dazu vorgesehen sein, axiale Kräfte aufzunehmen, während der rotatorische Antrieb des Fans über die Turbinenwelle und das Getriebe erfolgt. Da die weitere Welle sich ebenfalls dreht, wird das auf die Welle aufgebrachte Öl radial nach außen weggeschleudert oder es prallt von vornherein an der Welle ab, und auf diese Weise der mindestens einen Einbuchtung der Turbinenwelle zugeführt.

Eine Ausgestaltung hierzu sieht vor, dass die Welle ebenfalls eine Einbuchtung aufweist, in die der Ölapplikator Öl einsprüht, wobei die Einbuchtung der Welle an gleicher axialer Position der Einbuchtung der Antriebswelle radial gegenüber liegt. Diese Einbuchtung ist gemäß einem Ausführungsbeispiel ebenfalls als Nut ausgebildet. Die Einbuchtung der Welle dient dazu, das durch den Ölapplikator bereitgestellte Öl an geeigneter axialer Position zu sammeln. Von der Einbuchtung der weiteren Welle wird es dann radial zur Einbuchtung der Antriebswelle weggeschleudert.

Eine Ausgestaltung des Gasturbinentriebwerks sieht vor, dass die Turbine eine erste Turbine ist, der Verdichter ein erster Verdichter ist und die Turbinenwelle eine erste Turbinenwelle ist; dass der Triebwerkskern ferner eine zweite Turbine, einen zweiten Verdichter und eine zweite Turbinenwelle, die die zweite Turbine mit dem zweiten Verdichter verbindet, umfasst; und dass die zweite Turbine, der zweite Verdichter und die zweite Turbinenwelle dahingehend angeordnet sind, sich mit einer höheren Drehzahl als die erste Turbinenwelle zu drehen.

Ein weiterer Aspekt der vorliegenden Erfindung betrifft ein Verfahren zum Einbringen von Öl in eine Getriebeanordnung, die eine als Hohlwelle ausgebildete Antriebswelle und ein Abtriebselement umfasst, die durch eine Keilwellenverbindung miteinander verbunden sind. Das Verfahren fasst die Schritte:
- Einbringen von Öl in mindestens eine Einbuchtung, die an der radial inneren Seite der Antriebswelle ausgebildet ist, wobei die Antriebswelle mindestens eine Bohrung aufweist, die sich von der Einbuchtung zur radial äußeren Seite der Antriebswelle erstreckt,
- Transportieren von Öl von der mindestens einen Einbuchtung durch die mindestens eine Bohrung zur radial äußeren Seite der Antriebswelle bei Rotation der Antriebswelle, wobei das Öl einem Dichtungsbereich zugeführt wird, in dem die Keilwellenverbindung abgedichtet ist.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Von der x-Achse ausgehend zeigt die radiale Richtung radial nach außen. Begriffe wie "vor", "hinter", "vordere" und "hintere" beziehen sich auf die axiale Richtung bzw. die Strömungsrichtung im Triebwerk. Begriffe wie "äußere" oder "innere" beziehen sich auf die radiale Richtung.

Wie hier an anderer Stelle angeführt wird, kann sich die vorliegende Offenbarung auf ein Gasturbinentriebwerk beziehen. Solch ein Gasturbinentriebwerk kann einen Triebwerkskern umfassen, der eine Turbine, einen Brennraum, einen Verdichter und eine die Turbine mit dem Verdichter verbindende Kernwelle umfasst. Solch ein Gasturbinentriebwerk kann ein Gebläse (mit Gebläseschaufeln) umfassen, das stromaufwärts des Triebwerkskerns positioniert ist.

Anordnungen der vorliegenden Offenbarung können insbesondere, jedoch nicht ausschließlich, für Gebläse, die über ein Getriebe angetrieben werden, von Vorteil sein. Entsprechend kann das Gasturbinentriebwerk ein Getriebe umfassen, das einen Eingang von der Kernwelle empfängt und Antrieb für das Gebläse zum Antreiben des Gebläses mit einer niedrigeren Drehzahl als die Kernwelle abgibt. Der Eingang für das Getriebe kann direkt von der Kernwelle oder indirekt von der Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich das Gebläse mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen, die Turbinen und Verdichter verbinden, beispielsweise eine, zwei oder drei Wellen, aufweisen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Der Triebwerkskern kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei solch einer Anordnung kann der zweite Verdichter axial stromabwärts des ersten Verdichters positioniert sein. Der zweite Verdichter kann dahingehend angeordnet sein, Strömung von dem ersten Verdichter aufzunehmen (beispielsweise direkt aufzunehmen, beispielsweise über einen allgemein ringförmigen Kanal).

Das Getriebe kann dahingehend angeordnet sein, von der Kernwelle, die dazu konfiguriert ist, sich (beispielsweise im Gebrauch) mit der niedrigsten Drehzahl zu drehen, (beispielsweise die erste Kernwelle in dem obigen Beispiel) angetrieben zu werden. Beispielsweise kann das Getriebe dahingehend angeordnet sein, lediglich von der Kernwelle, die dazu konfiguriert ist, sich (beispielsweise im Gebrauch) mit der niedrigsten Drehzahl zu drehen, (beispielsweise nur von der ersten Kernwelle und nicht der zweiten Kernwelle bei dem obigen Beispiel) angetrieben zu werden. Alternativ dazu kann das Getriebe dahingehend angeordnet sein, von einer oder mehreren Wellen, beispielsweise der ersten und/oder der zweiten Welle in dem obigen Beispiel, angetrieben zu werden.

Bei einem Gasturbinentriebwerk, das hier beschrieben und/oder beansprucht wird, kann ein Brennraum axial stromabwärts des Gebläses und des Verdichters (der Verdichter) vorgesehen sein. Beispielsweise kann der Brennraum direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Der Brennraum kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln, bei denen es sich um variable Statorschaufeln (dahingehend, dass ihr Anstellwinkel variabel sein kann) handeln kann, umfassen. Die Reihe von Rotorschaufeln und die Reihe von Statorschaufeln können axial voneinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial voneinander versetzt sein.

Jede Gebläseschaufel kann mit einer radialen Spannweite definiert sein, die sich von einem Fuß (oder einer Nabe) an einer radial innenliegenden von Gas überströmten Stelle oder an einer Position einer Spannbreite von 0 % zu einer Spitze an einer Position einer Spannbreite von 100 % erstreckt. Das Verhältnis des Radius der Gebläseschaufel an der Nabe zu dem Radius der Gebläseschaufel an der Spitze kann weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Gebläseschaufel an der Nabe zu dem Radius der Gebläseschaufel an der Spitze kann in einem einschließenden Bereich liegen, der von zwei der Werte im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an dem vorderen Randteil (oder dem axial am weitesten vorne liegenden Rand) der Schaufel gemessen werden. Das Nabe-Spitze-Verhältnis bezieht sich natürlich auf den von Gas überströmten Abschnitt der Gebläseschaufel, d. h. den Abschnitt, der sich radial außerhalb jeglicher Plattform befindet.

Der Radius des Gebläses kann zwischen der Mittellinie des Triebwerks und der Spitze der Gebläseschaufel an ihrem vorderen Rand gemessen werden. Der Durchmesser des Gebläses (der einfach das Doppelte des Radius des Gebläses sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Gebläsedurchmesser kann in einem einschließenden Bereich liegen, der von zwei der Werte im vorhergehenden Satz begrenzt wird (d. h. die Werte können obere oder untere Grenzen bilden).

Die Drehzahl des Gebläses kann im Gebrauch variieren. Allgemein ist die Drehzahl geringer für Gebläse mit einem größeren Durchmesser. Lediglich als ein nicht einschränkendes Beispiel kann die Drehzahl des Gebläses bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Gebläses bei Konstantgeschwindigkeitsbedingungen für ein Triebwerk mit einem Gebläsedurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Gebläses bei Konstantgeschwindigkeitsbedingungen für ein Triebwerk mit einem Gebläsedurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich das Gebläse (mit zugehörigen Gebläseschaufeln) um eine Drehachse. Diese Drehung führt dazu, dass sich die Spitze der Gebläseschaufel mit einer Geschwindigkeit U_{Spitze} bewegt. Die von den Gebläseschaufeln an der Strömung verrichtete Arbeit resultiert in einem Anstieg der Enthalpie dH der Strömung. Eine Gebläsespitzenbelastung kann als dH/U_{Spitze}² definiert werden, wobei dH der Enthalpieanstieg (beispielsweise der durchschnittliche 1-D-Enthalpieanstieg) über das Gebläse hinweg ist und U_{Spitze} die (Translations-) Geschwindigkeit der Gebläsespitze, beispielsweise an dem vorderen Rand der Spitze, ist (die als Gebläsespitzenradius am vorderen Rand multipliziert mit der Winkelgeschwindigkeit definiert werden kann). Die Gebläsespitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Gebläsespitzenbelastung kann in einem einschließenden Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem einschließenden Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Triebwerkskerns befinden. Die radial äußere Fläche des Bypasskanals kann durch eine Triebwerksgondel und/oder ein Gebläsegehäuse definiert werden.

Das Gesamtdruckverhältnis eines Gasturbinentriebwerks, das hier beschrieben und/oder beansprucht wird, kann als das Verhältnis des Staudrucks stromaufwärts des Gebläses zu dem Staudruck am Ausgang des Höchstdruckverdichters (vor dem Eingang in den Brennraum) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem einschließenden Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 Nkg⁻¹s, 105 Nkg⁻¹s, 100 Nkg⁻¹s, 95 Nkg⁻¹s, 90 Nkg⁻¹s, 85 Nkg^{- 1}s oder 80 Nkg⁻¹s betragen (liegen). Der spezifische Schub kann in einem einschließenden Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160kN, 170kN, 180kN, 190kN, 200kN, 250kN, 300kN, 350kN, 400kN, 450kN, 500kN oder 550kN in der Lage sein. Der Höchstschub kann in einem einschließenden Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 Grad C (Umgebungsdruck 101,3 kPa, Temperatur 30 Grad C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zum Brennraum, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400K, 1450K, 1500K, 1550K, 1600K oder 1650K betragen (liegen). Die TET bei Konstantgeschwindigkeit kann in einem einschließenden Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700K, 1750K, 1800K, 1850K, 1900K, 1950K oder 2000K betragen (liegen). Die maximale TET kann in einem einschließenden Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Gebläseschaufel und/oder ein Blattabschnitt einer Gebläseschaufel, die hier beschrieben und/oder beansprucht wird, kann aus einem beliebigen geeigneten Material oder einer Kombination aus Materialien hergestellt werden. Beispielsweise kann zumindest ein Teil der Gebläseschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Gebläseschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Gebläseschaufel kann mindestens zwei Bereiche umfassen, die unter Verwendung verschiedener Materialien hergestellt werden. Beispielsweise kann die Gebläseschaufel einen vorderen Schutzrand aufweisen, der unter Verwendung eines Materials hergestellt wird, das dem Aufschlagen (beispielsweise von Vögeln, Eis oder anderem Material) besser widerstehen kann als der Rest der Schaufel. Solch ein vorderer Rand kann beispielsweise unter Verwendung von Titan oder einer auf Titan basierenden Legierung hergestellt werden. Somit kann die Gebläseschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Gebläse, das hier beschrieben und/oder beansprucht wird, kann einen mittleren Abschnitt umfassen, von dem sich die Gebläseschaufeln, beispielsweise in einer radialen Richtung, erstrecken können. Die Gebläseschaufeln können auf beliebige gewünschte Art und Weise an dem mittleren Abschnitt angebracht sein. Beispielsweise kann jede Gebläseschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Gebläseschaufel an der Nabe/Scheibe in einen entsprechenden Schlitz in der Nabe/Scheibe eingesteckt und/oder damit in Eingriff gebracht werden kann. Als ein weiteres Beispiel können die Gebläseschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Gebläseschaufeln aus einem Block maschinell herausgearbeitet werden und/oder mindestens ein Teil der Gebläseschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann eine Variation des Ausgangsquerschnitts des Bypasskanals im Gebrauch gestatten. Die allgemeinen Prinzipien der vorliegenden Offenbarung können auf Triebwerke mit oder ohne eine VAN zutreffen.

Das Gebläse einer Gasturbine, die hier beschrieben und/oder beansprucht wird, kann eine beliebige gewünschte Anzahl an Gebläseschaufeln, beispielsweise 16, 18, 20 oder 22 Gebläseschaufeln, aufweisen.

Gemäß der hier erfolgenden Verwendung können Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantfahrtbedingung sein. Bei einigen Luftfahrzeugen können die Konstantfahrtbedingungen außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt, entsprechen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 Grad C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Gebläsebetrieb ausgelegt ist, entsprechen. Dies kann beispielsweise die Bedingungen, bei denen das Gebläse (oder das Gasturbinentriebwerk) konstruktionsgemäß den optimalen Wirkungsgrad aufweist, bedeuten.

Im Gebrauch kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise 2 oder 4) Gasturbinentriebwerk zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks;
- Figur 2: eine Seitenschnittgroßansicht eines stromaufwärtigen Abschnitts eines Gasturbinentriebwerks;
- Figur 3: eine zum Teil weggeschnitte Ansicht eines Getriebes für ein Gasturbinentriebwerk;
- Figur 4: eine Schnittdarstellung von Elementen eines Planetengetriebes, das zum Einsatz in einem Gasturbinentriebwerk gemäß Figur 1 geeignet ist;
- Figur 5: ein erstes Ausführungsbeispiel einer Anordnung zum Einbringen von Öl in eine Keilwellenverbindung zwischen einer Antriebswelle und einem Sonnenrad, wobei Öl über eine radial innen in der Antriebswelle ausgebildete Einbuchtung und von dieser ausgehende radiale Bohrungen in die Keilwellenverbindung eingebracht wird, und wobei das Öl über einen Ölapplikator direkt der Einbuchtung zugeführt wird; und
- Figur 6: ein zweites Ausführungsbeispiel einer Anordnung zum Einbringen von Öl in eine Keilwellenverbindung zwischen einer Antriebswelle und einem Sonnenrad, wobei Öl über eine radial innen in der Antriebswelle ausgebildete Einbuchtung und von dieser ausgehende radiale Bohrungen in die Keilwellenverbindung eingebracht wird, und wobei das Öl über einen Ölapplikator der Einbuchtung indirekt zugeführt wird.

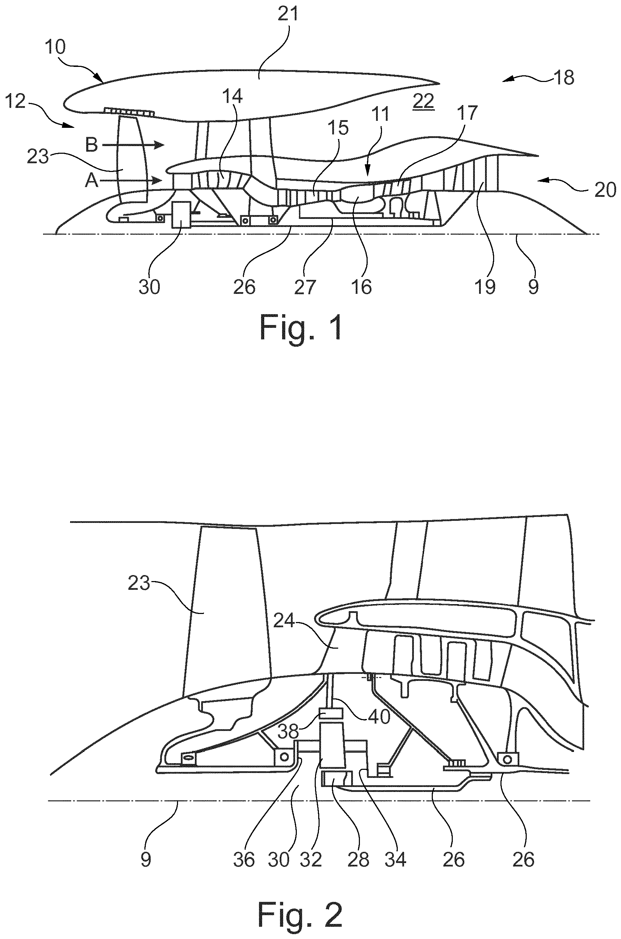

Figur 1 stellt ein Gasturbinentriebwerk 10 mit einer Hauptdrehachse 9 dar. Das Triebwerk 10 umfasst einen Lufteinlass 12 und ein Schubgebläse bzw. Fan 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Figur 2 gezeigt. Die Niederdruckturbine 19 (siehe Figur 1) treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 beschränkt die Planetenräder 32 darauf, synchron um das Sonnenrad 28 zu kreisen, während er ermöglicht, dass sich jedes Planetenrad 32 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

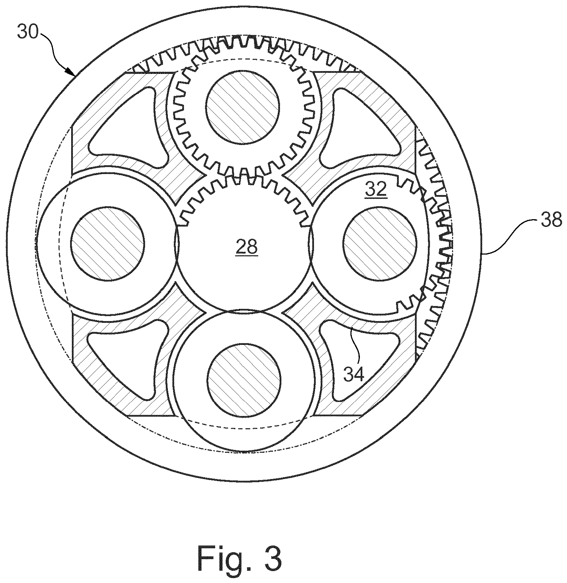

Das Epizykloidengetriebe 30 wird in Figur 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Figur 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in Figur 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden. Bei einigen Anordnungen umfasst das Gasturbinentriebwerk 10 möglicherweise kein Getriebe 30.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

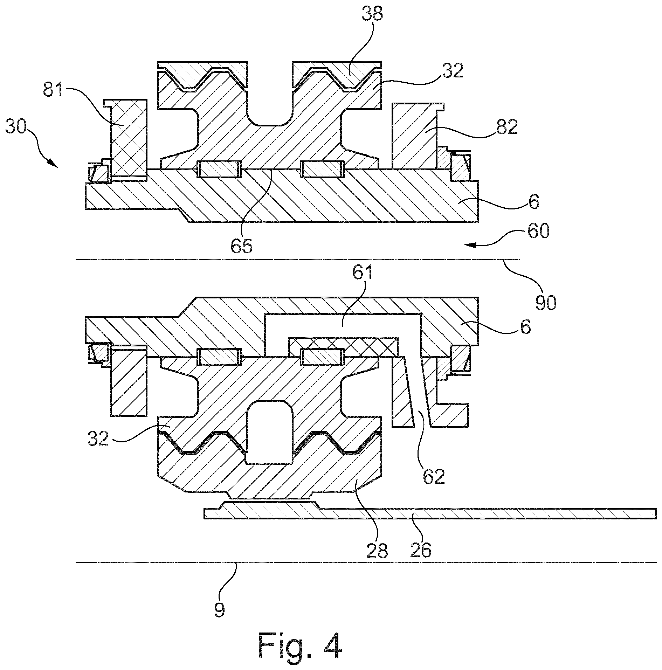

Die Figur 4 zeigt ein weiteres Ausführungsbeispiel eines Planetengetriebes eines als Getriebefan-Triebwerk ausgebildeten Gasturbinentriebwerks 10 gemäß der Figur 1 in einer Schnittdarstellung. Das Planetengetriebe 30 umfasst ein Sonnenrad 28, das von einer Antriebswelle bzw. Sonnenwelle 26 angetrieben wird. Bei der Antriebswelle 26 handelt sich um die Welle 26 der Figuren 1 und 2 bzw. allgemein um eine Turbinenwelle. Das Sonnenrad 28 und die Antriebswelle 26 drehen sich dabei um die Drehachse 9. Die Drehachse des Planetengetriebes 30 ist identisch mit der Drehachse 9 bzw. Maschinenachse des Gasturbinentriebwerks 10.

Das Planetengetriebe 30 umfasst des Weiteren eine Mehrzahl von Planetenrädern 32, von denen in der Schnittdarstellung der Figur 4 eines dargestellt ist. Das Sonnenrad 28 treibt die Mehrzahl der Planetenräder 32 an, wobei eine Verzahnung des Sonnenrads 28 mit einer Verzahnung des Planetenrads 32 in Eingriff steht.

Das Planetenrad 32 ist hohlzylindrisch ausgebildet und bildet eine äußere Mantelfläche und eine innere Mantelfläche. Das Planetenrad 32 rotiert - angetrieben durch das Sonnenrad 28 - um eine Drehachse 90, die parallel zur Drehachse 9 verläuft. Die äußere Mantelfläche des Planetenrads 32 bildet eine Verzahnung aus, die mit der Verzahnung eines Hohlrads 38 in Eingriff steht. Das Hohlrad 38 ist feststehend, d. h. nichtrotierend angeordnet. Die Planetenräder 32 rotieren aufgrund ihrer Kopplung mit dem Sonnenrad 28 und wandern dabei entlang des Umfangs des Hohlrads 38. Die Rotation der Planetenräder 32 entlang des Umfangs des Hohlrads 38 und dabei um die Drehachse 90 ist langsamer als die Rotation der Antriebswelle 26, wodurch eine Untersetzung bereitgestellt wird.

Das Planetenrad 32 weist angrenzend an seine innere Mantelfläche eine zentrierte axiale Öffnung auf. In die Öffnung eingebracht ist ein Planetenstift 6, der auch selbst eine axiale Bohrung 60 aufweist, wobei der Planetenstift 6 und das Planetenrad 32 an ihren einander zugewandten Flächen ein Lager 65 bilden, beispielsweise ein Wälzlager oder ein Gleitlager.

Die Figur 4 zeigt des Weiteren eine vordere Trägerplatte 81 und eine hintere Trägerplatte 82. Der Planetenstift 6 ist mit der vorderen Trägerplatte 81 und mit der hinteren Trägerplatte 82 befestigt, beispielsweise mit diesen verschraubt oder verschweißt. Beispielsweise ist die vordere Trägerplatte 81 mit einem Drehmomentträger verbunden, der mit der Fanwelle gekoppelt ist.

Zur Schmierung des Lagers 65 zwischen Planetenstift 6 und das Planetenrad 32 ist eine Ölzuführeinrichtung vorgesehen, die einen Ölzuführungskanal 62 umfasst, über den Öl eines zirkulierenden Ölsystems in Schmierfilmöffnungen 61 im Planetenstift 6 geleitet wird.

Die Antriebswelle 26 und das Sonnenrad 28 bilden eine Keilwellenverbindung, die mit Öl geschmiert ist. Im Kontext der vorliegenden Erfindung ist das Einbringen von Öl in die Keilwellenverbindung von Bedeutung.

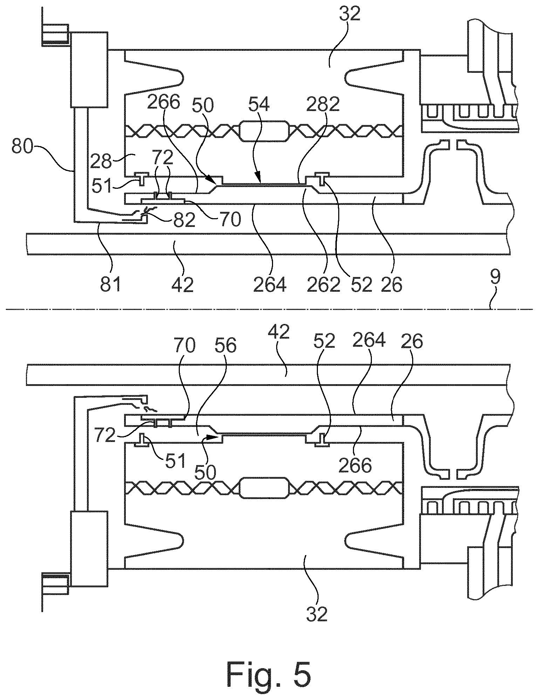

Hierzu zeigt die Figur 5 ein erstes Ausführungsbeispiel. Die Antriebswelle 26 bildet eine Außenkeilverzahnung 262 und das Sonnenrad 28 eine Innenkeilverzahnung 282, wobei die Außenkeilverzahnung 262 und die Innenkeilverzahnung 282 eine Keilwellenverbindung 50 bilden. Diese ist mit Öl geschmiert. Hierzu sind Dichtmittel in Form eines axial vorderen Dichtungsrings 51 und eines axial hinteren Dichtungsring 52 vorgesehen, die axial beanstandet zum eigentlichen Verzahnungsbereich 54 angeordnet sind, in dem die jeweiligen Verzahnungen 262, 282 in Eingriff stehen. Die Dichtungsringe 51, 52 dichten die Keilwellenverbindung 50 ab.

Zur Aufrechterhaltung eines ausreichenden Ölpegels in der Keilwellenverzahnung 50 ist es des Weiteren erforderlich, während des Betriebs Öl in die Keilwellenverbindung 50 einzubringen. Hierzu ist folgende Anordnung vorgesehen.

Die Antriebswelle 26, die als Hohlwelle ausgebildet ist, weist eine radial innere Seite 264 und eine radial äußere Seite 266 auf. Die radial innere Seite 264 ist der Keilwellenverbindung 50 abgewandt. Die radial äußere Seite 266 bildet die Außenkeilverzahnung 262 aus.

An ihrer radial inneren Seite 264 bildet die Antriebswelle eine Vertiefung bzw. Einbuchtung 70 aus. Die Einbuchtung 70 ist als Nut ausgebildet, die sich in Umfangsrichtung der Antriebswelle 26 durchgehend erstreckt. Jedoch kann die Einbuchtung 70 auch in anderer Weise ausgebildet sein, beispielsweise durch entlang des Umfangs verteilte kreisförmige Vertiefungen. Die Nut 70 weist beispielsweise wie dargestellt einen rechteckigen Querschnitt auf. Alternativ weist die Nut 70 einen nicht rechteckigen Querschnitt, z.B. einen U-förmigen Querschnit auf.

Des Weiteren sind Löcher bzw. Bohrungen 72 vorgesehen, die sich in der Antriebswelle in radialer Richtung von der Einbuchtung 70 zur radial äußeren Seite 266 der Antriebswelle 26 erstrecken. Dabei kann vorgesehen sein, dass eine Mehrzahl solcher Bohrungen 72 vorgesehen sind, wobei die Bohrungen beispielsweise äquidistant in Umfangsrichtung verteilt sind. Des Weiteren kann vorgesehen sein, dass mehrere Bohrungen in axialer Richtung hintereinander angeordnet sind. So zeigt die Figur 5 zwei in axialer Richtung hintereinander angeordnete Bohrungen 72, die sich jeweils von der Einbuchtung 70 zur radial äußeren Seite 266 der Antriebswelle 26 erstrecken.

Der beschriebene Aufbau bewirkt, dass bei Rotation der Antriebswelle 26 Öl, das in die Vertiefung 70 eingebracht ist, aufgrund der Zentrifugalkraft durch die Bohrungen 72 in den axial vorderen Zwischenbereich 56 zwischen der Antriebswelle 26 und dem Sonnenrad 28 transportiert wird. Die axiale Position der Einbuchtung 70 und der Bohrungen 72 ist dabei derart, dass diese in axialer Richtung zwischen dem axial vorderen Dichtungsring 52 und dem Verzahnungsbereich der Keilwellenverbindung 50 positioniert sind. Das Öl tritt somit durch die Bohrungen 72 in einen Dichtungsbereich der der Keilwellenverbindung 50 ein, in dem die Keilwellenverbindung 50 abgedichtet ist.

Der Durchmeser der Bohrungen 72 ist derart bemessen, dass bei Rotation der Antriebswelle 26 im Betrieb des Flugtriebwerks die Keilwellenverbindung 50 in ausreichendem Maße mit Öl versorgt wird.

Die Figur 5 zeigt des Weiteren eine weitere Welle 42, die radial innerhalb der Antriebswelle 26 verläuft. Hierbei handelt es sich beispielsweise um eine Welle, die mit dem Fan gekoppelt und dazu ausgebildet ist, axiale Kräfte aufzunehmen (sogenannter "thrust shaft").

Zur Befüllung der Einbuchtung 70 mit Öl ist ein Ölapplikator 80 vorgesehen, der einen Applikatorarm 81 mit einer Öl-Austrittsöffnung 82 umfasst. Der Applikatorarm 81 ragt dabei stirnseitig in den Bereich zwischen der weiteren Welle 42 und der Antriebswelle 26. Die Öl-Austrittsöffnung 82 ist dabei derart positioniert, dass über sie ein Öljet direkt in die Einbuchtung 70 appliziert werden kann.

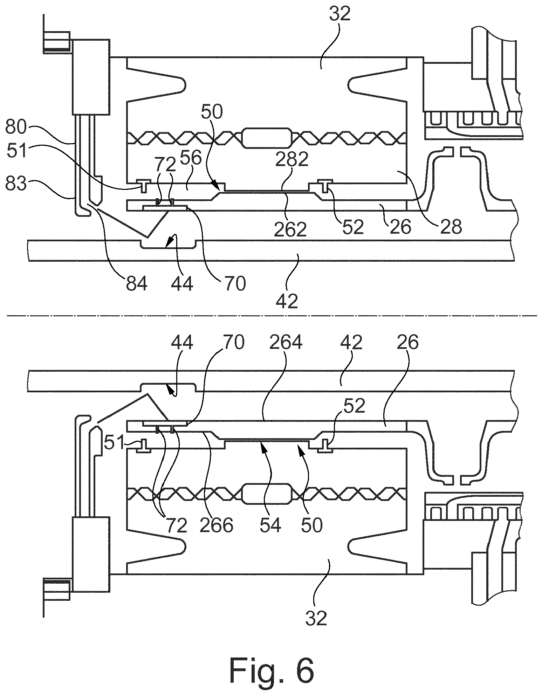

Die Figur 6 zeigt ein weiteres Ausführungsbeispiel, das sich von dem Ausführungsbeispiel der Figur 5 durch die Art der Bereitstellung von Öl in der Einbuchtung 70 unterscheidet. Davon abgesehen entspricht das Ausführungsbeispiel der Figur 6 dem Ausführungsbeispiel der Figur 5, so dass auf die Ausführungen zum Ausführungsbeispiel der Figur 5 insofern Bezug genommen wird.

Bei dem Ausführungsbeispiel der Figur 6 ist vorgesehen, das Öl durch den Ölapplikator 80 zunächst auf die weitere Welle 42 appliziert wird. Hierbei ist es nicht erforderlich, dass ein Applikatorarm des Ölapplikators stirnseitig in die Wellenanordnung hineinragt. Der Applikatorarm 83 des Ölapplikators 80 ist beim Ausführungsbeispiel der Figur 6 axial vor der Antriebswelle 26 angeordnet. Er weist eine Öl-Austrittsöffnung 84 auf, die einen Öljet schräg in Richtung der Welle 42 abgibt. Dabei ist vorgesehen, dass die Welle 42 ebenfalls eine Einbuchtung 44 aufweist, in die der Ölapplikator 80 Öl einsprüht. Die Einbuchtung 44 der Welle 42 ist dabei an gleicher axialer Position ausgebildet wie die Einbuchtung 72 der Antriebswelle 26.

Die Funktionsweise der Ölapplikation ist derart, dass das Öl sich durch die Einbuchtung 44 zunächst an der gewünschten axialen Position in der Welle 42 ansammelt. Durch die Rotation der Welle 42 wird das Öl dann in Richtung der Einbuchtung 70 der Antriebswelle 26 von der Welle 42 weggeschleudert. Von der Einbuchtung 70 wird es in beschriebener Weise über die Löcher bzw. Bohrungen 72 in den abgedichteten Bereich der Keilwellenverzahnung 50 transportiert.

Eine Variante des Ausführungsbeispiels der Figur 6 sieht vor, dass die Welle 42 keine Einbuchtung 44 aufweist. Bei präzisem Sprühen eines Öljets auf die Welle 42 erfolgt trotzdem ein Abschleudern in Richtung der Einbuchtung 70 an richtiger axialer Position.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Beliebige der Merkmale können separat oder in Kombination mit beliebigen anderen Merkmalen eingesetzt werden, sofern sie sich nicht gegenseitig ausschließen, und die Offenbarung dehnt sich auf alle Kombinationen und Unterkombinationen eines oder mehrerer Merkmale, die hier beschrieben werden, aus und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Gasturbinentriebwerk (10) für ein Luftfahrzeug, das aufweist:
- einen Triebwerkskern (11), der eine Turbine (19), einen Verdichter (14) und eine die Turbine mit dem Verdichter verbindende, als Hohlwelle ausgebildete Turbinenwelle (26) umfasst;
- einen Fan (23), der stromaufwärts des Triebwerkskerns (11) positioniert ist, wobei der Fan (23) mehrere Fanschaufeln umfasst; und
- ein Getriebe (30), das einen Eingang von der Turbinenwelle (26) empfängt und Antrieb für den Fan (23) zum Antreiben des Fans mit einer niedrigeren Drehzahl als die Turbinenwelle (26) abgibt, wobei
- das Getriebe (30) ein Sonnenrad (28) aufweist, das von der Turbinenwelle (26) angetrieben wird, und
- die Turbinenwelle (26) und das Sonnenrad (28) eine Keilwellenverbindung (50) bilden, die mit Öl geschmiert ist,
**dadurch gekennzeichnet,**
**dass** die Turbinenwelle (26) auf ihrer radial inneren Seite (264) mindestens eine Einbuchtung (70) aufweist, die dazu geeignet ist, Öl aufzunehmen, und die Turbinenwelle (26) mindestens eine Bohrung (72) aufweist, die sich von der Einbuchtung (70) zur radial äußeren Seite (266) der Turbinenwelle (26) erstreckt und die dazu geeignet ist, bei Rotation der Turbinenwelle (26) Öl von der mindestens einen Einbuchtung (70) zur radial äußeren Seite (266) der Turbinenwelle (26) zu transportieren und in die Keilwellenverbindung (50) einzubringen.

2. Gasturbinentriebwerk nach Anspruch 1, **dadurch gekennzeichnet, dass** die Einbuchtung (70) durch eine in Umfangsrichtung durchgehende Nut gebildet ist.

3. Gasturbinentriebwerk nach Anspruch 1 oder 2, **dadurch gekennzeichnet, dass** mehrere Bohrungen (72) vorgesehen sind, die sich von der Einbuchtung (70) zur radial äußeren Seite (266) der Turbinenwelle (26) erstrecken, wobei die Bohrungen (72) äquidistant in Umfangsrichtung angeordnet sind.

4. Gasturbinentriebwerk nach einem der vorangehenden Ansprüche, **dadurch gekennzeichnet, dass** mehrere Bohrungen (72) vorgesehen sind, die sich von der Einbuchtung (70) zur radial äußeren Seite (266) der Turbinenwelle (26) erstrecken, wobei die Bohrungen (72) in axialer Richtung hintereinander angeordnet sind.

5. Gasturbinentriebwerk nach einem der vorangehenden Ansprüche, **dadurch gekennzeichnet, dass** die Einbuchtung (70) axial derart positioniert, dass die mindestens eine Bohrung (72) in einem abgedichteten Bereich (56) der Keilwellenverbindung (50) endet.

6. Gasturbinentriebwerk nach einem der vorangehenden Ansprüche, **dadurch gekennzeichnet, dass** die Einbuchtung (70) axial derart positioniert, dass sie axial zwischen einem axial vorderen Dichtungselement (51) und einem axial hinteren Dichtungselement (52) der Keilwellenverbindung (50) befindet.

7. Gasturbinentriebwerk nach Anspruch 6, **dadurch gekennzeichnet, dass** die Einbuchtung (70) in axialer Richtung vor einem Verzahnungsbereichs (54) der Keilwellenverbindung (50) ausgebildet ist.

8. Gasturbinentriebwerk nach einem der vorangehenden Ansprüche, **gekennzeichnet durch** einen Ölapplikator (80), über den Öl in die Einbuchtung (70) eingebracht wird.

9. Gasturbinentriebwerk nach Anspruch 8, **dadurch gekennzeichnet, dass** der Ölapplikator (80) derart ausgerichtet und positioniert ist, dass Öl auf eine Welle (42) gesprüht wird, die radial innen der Turbinenwelle (26) angeordnet ist, und von der Welle (42) in die Einbuchtung (70) abprallt oder abschleudert.

10. Gasturbinentriebwerk nach Anspruch 9, **dadurch gekennzeichnet, dass** die Welle (42) ebenfalls eine Einbuchtung (44) aufweist, in die der Ölapplikator (80) Öl einsprüht, wobei die Einbuchtung (44) der Welle (42) an gleicher axialer Position der Einbuchtung (70) der Antriebswelle (26) radial gegenüber liegt.

11. Gasturbinentriebwerk nach Anspruch 10, **dadurch gekennzeichnet, dass** die Einbuchtung (44) der Welle (42) als Nut ausgebildet ist.

12. Verfahren zum Einbringen von Öl in eine Getriebeanordnung, die eine als Hohlwelle ausgebildete Turbinenwelle (26) und ein Sonnenrad (28) umfasst, die durch eine Keilwellenverbindung (50) miteinander verbunden sind, wobei das Verfahren aufweist:
- Einbringen von Öl in mindestens eine Einbuchtung (70), die an der radial inneren Seite (264) der Turbinenwelle (26) ausgebildet ist, wobei die Turbinenwelle (26) mindestens eine Bohrung (72) aufweist, die sich von der Einbuchtung (70) zur radial äußeren Seite (266) der Turbinenwelle (26) erstreckt,
- Transportieren von Öl von der mindestens einen Einbuchtung (70) durch die mindestens eine Bohrung (72) zur radial äußeren Seite (266) der Turbinenwelle (26) bei Rotation der Turbinenwelle (26), wobei das Öl einem Dichtungsbereich zugeführt wird, in dem die Keilwellenverbindung (50) abgedichtet ist.

## Claims

1. Gas turbine engine (10) for an aircraft, having:
- an engine core (11) which comprises a turbine (19), a compressor (14) and a turbine shaft (26) which connects the turbine to the compressor and which is in the form of a hollow shaft;
- a fan (23) which is positioned upstream of the engine core (11), wherein the fan (23) comprises multiple fan blades; and
- a gearbox (30) which receives an input from the turbine shaft (26) and which outputs drive for the fan (23) for the purposes of driving the fan at a lower rotational speed than the turbine shaft (26), wherein
- the gearbox (30) has a sun gear (28) which is driven by the turbine shaft (26), and
- the turbine shaft (26) and the sun gear (28) form a spline connection (50) which is lubricated with oil,
**characterized**
**in that** the turbine shaft (26) has, on its radially inner side (264), at least one indentation (70) which is suitable for receiving oil, and the turbine shaft (26) has at least one bore (72) which extends from the indentation (70) to the radially outer side (266) of the turbine shaft (26) and which is suitable for transporting oil from the at least one indentation (70) to the radially outer side (266) of the turbine shaft (26) as the turbine shaft (26) rotates and for introducing said oil into the spline connection (50).

2. Gas turbine engine according to Claim 1, **characterized in that** the indentation (70) is formed by a groove which is continuous in a circumferential direction.

3. Gas turbine engine according to Claim 1 or 2, **characterized in that** multiple bores (72) are provided which extend from the indentation (70) to the radially outer side (266) of the turbine shaft (26), wherein the bores (72) are arranged equidistantly in the circumferential direction.

4. Gas turbine engine according to any of the preceding claims, **characterized in that** multiple bores (72) are provided which extend from the indentation (70) to the radially outer side (266) of the turbine shaft (26), wherein the bores (72) are arranged one behind the other in an axial direction.

5. Gas turbine engine according to any of the preceding claims, **characterized in that** the indentation (70) is positioned axially such that the at least one bore (72) ends in a sealed-off region (56) of the spline connection (50).

6. Gas turbine engine according to any of the preceding claims, **characterized in that** the indentation (70) is positioned axially so as to be situated axially between an axially front seal element (51) and an axially rear seal element (52) of the spline connection (50).

7. Gas turbine engine according to Claim 6, **characterized in that** the indentation (70) is formed in an axial direction in front of a toothing region (54) of the spline connection (50).

8. Gas turbine engine according to any of the preceding claims, **characterized by** an oil applicator (80) by means of which oil is introduced into the indentation (70).

9. Gas turbine engine according to Claim 8, **characterized in that** the oil applicator (80) is oriented and positioned such that oil is sprayed onto a shaft (42) arranged radially inside the turbine shaft (26) and rebounds or is centrifuged from the shaft (42) into the indentation (70).

10. Gas turbine engine according to Claim 9, **characterized in that** the shaft (42) likewise has an indentation (44), into which the oil applicator (80) sprays oil, wherein the indentation (44) of the shaft (42) is situated, at the same axial position, radially opposite the indentation (70) of the drive shaft (26).

11. Gas turbine engine according to Claim 10, **characterized in that** the indentation (44) of the shaft (42) is formed as a groove.

12. Method for introducing oil into a gearbox arrangement which comprises a turbine shaft (26), formed as hollow shaft, and a sun gear (28), which turbine shaft and sun gear are connected to one another by means of a spline connection (50), wherein the method has:
- introducing oil into at least one indentation (70) which is formed on the radially inner side (264) of the turbine shaft (26), wherein the turbine shaft (26) has at least one bore (72) which extends from the indentation (70) to the radially outer side (266) of the turbine shaft (26),
- transporting oil from the at least one indentation (70) through the at least one bore (72) to the radially outer side (266) of the turbine shaft (26) as the turbine shaft (26) rotates, wherein the oil is fed to a seal region in which the spline connection (50) is sealed off.

## Revendications

1. Turbomoteur à gaz (10) pour un aéronef, présentant :
- un noyau de moteur (11) qui comprend une turbine (19), un compresseur (14) et un arbre de turbine (26) réalisé sous la forme d'un arbre creux et qui relie la turbine au compresseur ;
- une soufflante (23) qui est positionnée en amont du noyau de moteur (11), la soufflante (23) comprenant plusieurs aubes de soufflante ; et
- une transmission (30) qui reçoit une entrée de l'arbre de turbine (26) et fournit l'entraînement pour la soufflante (23) afin d'entraîner la soufflante à une vitesse de rotation inférieure à celle de l'arbre de turbine (26), dans lequel
- la transmission (30) présente une roue solaire (28) qui est entraînée par l'arbre de turbine (26), et
- l'arbre de turbine (26) et la roue solaire (28) forment un accouplement à cannelures (50) qui est lubrifié à l'huile,
**caractérisé en ce que** l'arbre de turbine (26) présente sur sa face radialement intérieure (264) au moins un creux (70) qui est adapté pour recevoir de l'huile, et l'arbre de turbine (26) présente au moins un alésage (72) qui s'étend du creux (70) jusqu'à la face radialement extérieure (266) de l'arbre de turbine (26) et est adapté, lors d'une rotation de l'arbre de turbine (26), pour transporter de l'huile dudit au moins un creux (70) jusqu'à la face radialement extérieure (266) de l'arbre de turbine (26) et pour l'introduire dans l'accouplement à cannelures (50).

2. Turbomoteur à gaz selon la revendication 1, **caractérisé en ce que** le creux (70) est formé par une rainure continue dans la direction circonférentielle.

3. Turbomoteur à gaz selon la revendication 1 ou 2, **caractérisé en ce que** plusieurs alésages (72) sont prévus, qui s'étendent du creux (70) jusqu'à la face radialement extérieure (266) de l'arbre de turbine (26), les alésages (72) étant disposés de manière équidistante dans la direction circonférentielle.

4. Turbomoteur à gaz selon l'une quelconque des revendications précédentes, **caractérisé en ce que** plusieurs alésages (72) sont prévus, qui s'étendent du creux (70) jusqu'à la face radialement extérieure (266) de l'arbre de turbine (26), les alésages (72) étant disposés les uns après les autres dans la direction axiale.

5. Turbomoteur à gaz selon l'une quelconque des revendications précédentes, **caractérisé en ce que** le creux (70) est positionné axialement de telle sorte que ledit au moins un alésage (72) se termine dans une zone rendue étanche (56) de l'accouplement à cannelures (50) .

6. Turbomoteur à gaz selon l'une quelconque des revendications précédentes, **caractérisé en ce que** le creux (70) est positionné axialement de telle sorte qu'il se trouve axialement entre un élément d'étanchéité axialement avant (51) et un élément d'étanchéité axialement arrière (52) de l'accouplement à cannelures (50).

7. Turbomoteur à gaz selon la revendication 6, **caractérisé en ce que** le creux (70), dans la direction axiale, est réalisé avant une zone de denture (54) de l'accouplement à cannelures (50).

8. Turbomoteur à gaz selon l'une quelconque des revendications précédentes, **caractérisé par** un applicateur d'huile (80) permettant d'introduire de l'huile dans le creux (70).

9. Turbomoteur à gaz selon la revendication 8, **caractérisé en ce que** l'applicateur d'huile (80) est orienté et positionné de telle sorte que de l'huile est vaporisée sur un arbre (42) qui est disposé radialement à l'intérieur de l'arbre de turbine (26) et rejaillit ou est projetée de l'arbre (42) dans le creux (70).

10. Turbomoteur à gaz selon la revendication 9, **caractérisé en ce que** l'arbre (42) présente également un creux (44) dans lequel l'applicateur d'huile (80) vaporise de l'huile, le creux (44) de l'arbre (42) étant dans la même position axiale radialement opposé au creux (70) de l'arbre d'entraînement (26).

11. Turbomoteur à gaz selon la revendication 10, **caractérisé en ce que** le creux (44) de l'arbre (42) est réalisé sous la forme d'une rainure.

12. Procédé d'introduction d'huile dans un agencement de transmission qui comprend un arbre de turbine (26) réalisé sous la forme d'un arbre creux et une roue solaire (28) qui sont reliés par un accouplement à cannelures (50), le procédé comprenant les étapes consistant à :
- introduire de l'huile dans au moins un creux (70) qui est réalisé sur la face radialement intérieure (264) de l'arbre de turbine (26), l'arbre de turbine (26) présentant au moins un alésage (72) qui s'étend du creux (70) jusqu'à la face radialement extérieure (266) de l'arbre de turbine (26),
- transporter de l'huile dudit au moins un creux (70) à travers ledit au moins un alésage (72) jusqu'à la face radialement extérieure (266) de l'arbre de turbine (26) en cas de rotation de l'arbre de turbine (26), l'huile étant amenée à une zone d'étanchéité dans laquelle l'accouplement à cannelures (50) est rendu étanche.
